Europäisches Patentamt

European Patent Office

Office européen des brevets

(11) Publication number: **0 396 355**
**A2**

## EUROPEAN PATENT APPLICATION

(21) Application number: **90304629.0**

(22) Date of filing: **27.04.90**

(51) Int. Cl.5: **B60R 16/02**

(30) Priority: **04.05.89 GB 8910261**

(43) Date of publication of application:
**07.11.90 Bulletin 90/45**

(84) Designated Contracting States:
**BE DE ES FR GB IT SE**

(71) Applicant: **SALPLEX LIMITED**
**Times Mill**
**Heywood, Lancashire OL10 4NE(GB)**

(72) Inventor: **Hodgkiss, James Arthur**
**22 The Paddock**
**Tarporley Cheshire CW6 0BT(GB)**
Inventor: **Foster, Michael John**
**23 Thistle Down Close Streetly**
**Sutton Coldfield West Midlands B74 3EE(GB)**

(74) Representative: **Sperling, David et al**
**Central Patent Dept. (Wembley Office) The**
**General Electric Company plc Hirst**
**Research Centre East Lane**
**Wembley Middlesex HA9 7PP(GB)**

(54) **Information handling and control systems.**

(57) An automotive vehicle electrical system has a central unit (10) with remote units (20) connected to the central unit (10) by multiplex signalling links (40). User operable switches (60,61) and non-critical loads (70,71) are connected to the remote units (20) and in normal operation their interaction is under functional control of processing and control means (12) in the central unit (10). Further user operable switches (600,601) and critical loads (700,701) are connected to a driver unit (15) in the central unit (10) which in normal operation is connected via buffer means (16) to the processing and control means (12). The central unit (10) also includes monitoring means (17) which can detect failure of the processing and control means (12) and in response disconnect the buffer means (16) from the driver unit (15) so that the critical loads (700,701) are then safeguarded by being under direct control of the further switches (600,601) via the driver unit (15).

# Information handling and control systems

This invention relates to information handling and control systems, for example for inclusion in automotive vehicle electrical systems.

In particular this invention relates to an information handling and control system comprising a central unit and a plurality of remote units each connected to the central unit by a respective low current signalling link, wherein the central unit includes processing and control means, wherein at least one of the remote units has a user operable electrical switch connected to it, wherein at least one of the remote units includes power switching means for operating a respective high current load connected to that remote unit, wherein in normal operation of the system the processing and control means detects an input signal from a said switch and in response provides an output signal to control a said power switching means and thereby operate a said load associated by the processing and control means with said switch.

An example of such a system in the form of an automotive vehicle electrical system is known from the article "Multiplexing for the automotive industry" by W.R. Betts in GEC REVIEW, Vol.2, No.1, 1986 at pages 32 to 36. This GEC REVIEW article describes a star wired system with an intelligent, central, master unit and a number of non-intelligent, remote, slave units. Power from a battery is supplied to the master unit and via fuses to the slave units. A low current signalling link is connected from the master unit to each slave unit. Electrical switches, sensors, and high current loads are connected to the slave units and their interaction is controlled from the master unit by means of time slot assignment multiplex. The master unit has a microprocessor connected to operate and interact with clock drive and bus interface circuits. The battery is connected to power supplies for the microprocessor and for these circuits. A "watchdog" circuit is interconnected with a reset input of the microprocessor, and a "defaults inverter" circuit is connected to the battery and to the "watchdog". The watchdog and defaults inverter circuits indicate the provision of a conventional basic level of fault protection covering resettable program errors in the single microprocessor and power supply failure.

In information handling and control systems of the type to which this invention relates, it may be desirable to provide more than the basic level of fault protection such as is disclosed in the GEC REVIEW article. A conventional method of fault protection for computer controlled systems is fully to duplicate the computer, which is of course expensive. We have considered providing a system of the type disclosed in the GEC REVIEW article in which the master unit has two microprocessors arranged with each microprocesser controlling a different 40% of the remote unit loads and the two microprocessors each able to control the remaining 20% (critical) remote unit loads, so that if a fault occurs in one of the microprocessors then the other microprocessor operates 60% of the loads including the critical loads. This is less expensive than full duplication of the microprocessor functions, but even so there will be the possibility that both microprocessors can fail with the result that the critical loads are not controlled.

An object of the present invention is to overcome the disadvantages, as mentioned, in the above-described proposals for fault protection.

According to the invention there is provided an information handling and control system as defined in the second paragraph of this specification characterised in that:

(a) said switches constitute a set of first switches, and said loads constitute a set of first, non-critical, loads, wherein on failure of normal operation of the processing and control means the first switches cannot operate the non-critical loads;

(b) a set of further remote, user operable, electrical switches is provided, each further switch being connected by a respective low current signalling link to the central unit;

(c) a set of further remote, critical, high current loads is provided, each critical load being operable by respective further power switching means and connected by a respective link to the central unit;

(d) the central unit includes a driver unit having a plurality of driver means each having an input connected to a dedicated one of said further switches and an output connected to a dedicated one of said further power switching means;

(e) the central unit includes buffer means connected to the processing and control means, said buffer means having inputs each connected to a said further switch and outputs each connected to a further input of said driver unit, wherein in normal operation of the system the processing and control means detects an input signal from a said further switch via said buffer means and in response provides an output signal via said buffer means to control a said driver means and thereby operate a said critical load associated by the processing and control means with said further switch; and

(f) the central unit includes monitoring means for detecting a predetermined failure condition of means within the central unit, said failure condition indicating failure of normal operation of the processing and control means, the monitoring means being connected to the buffer means, wherein in response to said failure condition detection the buffer means outputs are disconnected from the driver unit and an input signal from a said further switch then directly controls its respective driver means to operate its respective critical load.

The low current signalling links connecting the remote units to the central units may be multiplex links with, in normal operation of the system, interaction of the set of first switches and the set of non-critical loads being controlled from the central unit by means of time slot assignment multiplex in the same manner as the system described in the above referred to GEC REVIEW article.

Each link connecting a critical load to the central unit may be a low current signalling link, in which case each further power switching means provided for operating its respective critical load may be located remote from the central unit and near to its respective critical load and be controlled by the respective output of the driver means via that low current signalling link.

A main advantage of the arrangement according to the invention in which a failure condition results in disconnection of the buffer means outputs from the driver unit so that the critical loads come under direct control of the user operable further switches via dedicated connections in the driver unit is that nothing in the central unit associated with operation of the non-critical loads need be duplicated in order to safeguard operation of the critical loads, while the benefit is retained that in normal operation of the system the further switches and critical loads are included with the first switches and non-critical loads under functional control of the processing and control means. For example in an automotive vehicle electrical system the critical loads could be the engine ignition feed, headlights, tail lights, and possibly the windscreen wipers, so that if normal operation of the system fails these items are under direct individual control of the user and the vehicle may be safely taken to the side of the road. In this example of an automotive vehicle electrical system the non-critical loads could be seat adjustment electrical motors or window winder electrical motors. Thus in normal operation of the system, the functional control of the processing and control means may ensure, for example, that the headlights are not turned on unless the ignition is turned on and that the seats cannot be adjusted unless the ignition is turned off.

Another advantage of the arrangement according to the invention in which in normal operation of the system the further switches and critical loads are under functional control of the processing and control means is that these further switches and critical loads may be tested via the processing and control means in the central unit without the need for the user to operate these further switches. This test function can be incorporated as a programmable function of the processing and control means or it can be performed with test equipment when connected to the central unit.

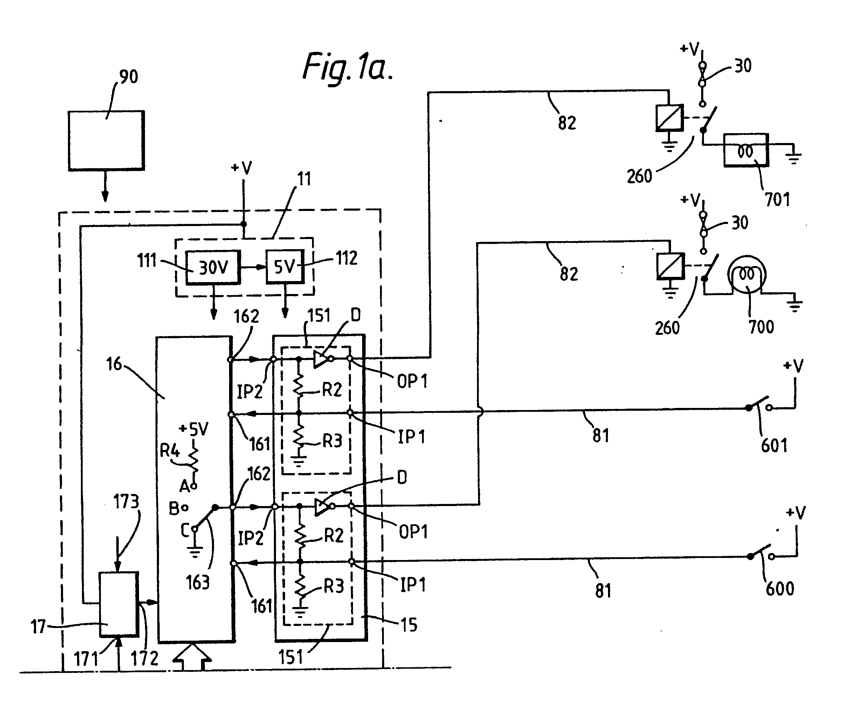

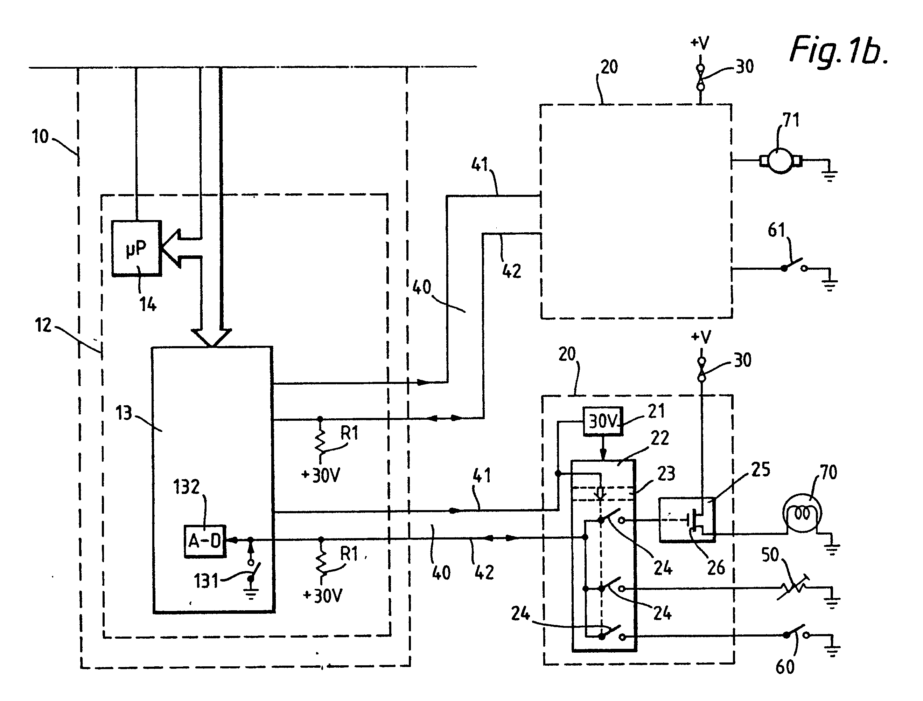

An information handling and control system according to the invention will now be described in more detail with reference to the accompanying drawing.

Referring now to the drawing, an intelligent, central, master unit 10 is shown in a star-wired configuration with a number of non-intelligent, remote, slave units 20. Power from a battery +V is supplied to the central unit 10 and via fuses 30 to the remote units 20. A low current multiplex signalling link 40 is connected from the central unit 10 to each remote unit 20. Sensors 50, user operable electrical switches 60,61 and high current loads 70,71 are connected to the remote units 20 and in normal operation of the system their interaction is controlled from the central unit 10 by means of time slot assignment multiplex.

The central unit 10 includes 30 volt and 5 volt power supplies 111 and 112 in power supply means 11 fed by a battery +V which is 12 volts in an automotive vehicle electrical system. The central unit 10 includes processing and control means 12 and in normal operation of the system the power supplies 111,112 operate a custom unit 13 and a microprocessor 14 connected thereto in the processing and control means 12. Each low current signalling link 40 to a remote unit 20 includes a clock pulse line 41 and a signal line 42. The clock pulses on the lines 41 are of 30 volts amplitude and control the timing of the system time slot assignment multiplex. In each time slot a switch 131 in the custom unit 13 connected to each signal line 42 controls the application to that signal line 42 of zero volts or the fixed voltage supply of 30 volts via a respective pull-up resistor R1.

In each remote unit 20, one of which is shown in detail, a 30 volt power supply 21 is derived from the clock pulses on the line 41 during normal operation of the system. A demultiplexing unit 22 has timing circuits 23 responsive to the clock pulses on the line 41 and from which switches 24 are operated to connect the low current signal line 42 through a corresponding channel in the appropriate time slot. Each remote unit 20 can connect for example sixteen channels, three of which are shown connected to the demultiplexing unit 22.

A variable resistor sensor 50 is shown wired to one of the channels from the demultiplexer unit 22. With the sensor 50 connected in the signal line 42 during the appropriate time slot and the switch 131 in the central unit 10 open during that time slot, then the voltage on the signal line 42 is an input signal from the sensor 50 due to its resistance, and this input signal is detected via an analogue-to-digital converter 132 in the central unit 10.

A user operable electrical switch 60, e.g. a manually operable toggle switch, is shown wired to another one of the channels from the demultiplexer unit 22. With the switch 60 connected in the signal line 42 during its appropriate time slot and the switch 131 in the central unit 10 open during that time slot, then the voltage on the signal line 42 due to the resistance between the two terminals of that switch 60 is detected via the analogue-to-digital converter 132 in the central unit 10 as a binary input signal from that switch 60.

Another of the channels from the demultiplexer unit 22 is shown connected in the remote unit to an output circuit 25. In normal operation of the system, the state of the switch 131 during the appropriate time slot will provide an output signal on the signal line 42 to power switching means 26, for example a power MOSFET transistor, in the output circuit 25 to control a high current from the battery + V via a fuse 30 to a respective load, for example a lamp 70 or a motor 71, wired to the remote unit 20. The microprocessor 14 in the central unit 10 ensures that the output signal on a signal line 42 to control a high current to a particular load 70,71 connected to any one of the remote units 20 is in response to an input signal from a particular switch 60,61 which is to be associated by the processing and control means 12 with that load 70,71 and is connected to any one of the remote units 20.

The low currents in the low current multiplex signalling links 40 of the system, for example through the signal line 42 when it includes a switch 60,61 may be, for example, not greater than 5mA. The high currents through the loads connected to the remote units 20 of the system, for example to one of the loads 70,71 controlled in response to a a switch 60,61 may be, for example, up to 10 amps.

On failure of normal operation of the processing and control means 12, which may be due to a fault in operation or failure of the microprocessor 14 or a failure of one of the power supplies 111,112, the loads 70,71 connected to the remote units 20 cannot be operated by the switches 60,61. These loads 70,71 are selected to be non-critical loads of the system, for example in an automotive vehicle electrical system they could be seat adjustment electrical motors or window winder electrical motors.

The system has a set of further remote, user operable, electrical switches 600,601 with each further switch 600,601 being connected by a respective low current signalling link 81 to the central unit 10. There is also a set of further remote, high current loads 700,701 with each high current load 700,701 being operable by a respective further power switching means 260 and connected by a respective link 82 to the central unit 10. These further loads 700,701 are selected to be critical loads of the system, for example in an automotive vehicle electrical system they could be the engine ignition feed, headlights, tail lights, and possibly the windscreen wipers.

The central unit 10, in addition to the power supply means 11 and the processing and control means 12 described above, also includes a driver unit 15, buffer means 16 and monitoring means 17. The driver unit 15 has a number of driver means 151 each having an input IP1 connected to a dedicated one of the further switches 600,601 and an output OP1 connected to a dedicated one of the power switching means 260. The buffer means 16 is connected to the processing and control means 12, and the buffer means 16 has inputs 161 each connected to one of the further switches 600,601 and outputs 162 each connected to a further input IP2 of the driver unit 15. The monitoring means 17 is connected to the buffer means 16.

Each driver means 151 includes a driver inverter D and two resistors R2 and R3. The output of each driver D is connected to the output OP1 of the respective driver means 151. The input of each driver D is connected to one end of the respective resistor R2 and also to the respective further input IP2 of the driver unit 15. The other end of each resistor R2 is connected to the respective input IP1 of the driver means 151, to the respective input 161 of the buffer means 16, and via the resistor R3 to zero volts.

Operation of a further switch 600,601 provides a high voltage input signal if the switch 600,601 is closed by the user or otherwise a low voltage input signal via the resistor R3 to the respective input 161 of the buffer means 16. An input circuit (not shown) connected to each buffer means input 161 has an impedance such as not to affect the input signal from the respective further switch 600,601 but to pass the binary result of that input signal for detection in normal operation of the system by the microprocessor 14 of the processing and control means 12.

A tri-state drive voltage circuit 163 is provided in the buffer means 16 connected to each output 162 of the buffer means 16.

The drive voltage circuit 163 is shown schematically as a switch having three positions A,B, and C. In position A the switch 163 applies a high voltage, which may be 5 volts via a resistor R4, to the output 162. In position C the switch 163 applies a low voltage, which may be zero volts, to the output 162. In position B the switch 163 applies a high impedance, for example in practice a transistor open collector or open drain output, to the output 162 which effectively disconnects the output 162 from the driver unit 15.

In normal operation of the system each drive voltage circuit 163 is controlled by the microprocessor 14 of the processing and control means 12 to apply high voltage (position A) or low voltage (position C) to the respective output 162 and hence, via the input IP2 of the respective driver means 151 to the input of the respective driver D. The resistor R2 in each driver means 151 has a high value such that in normal operation of the system the output of the driver D which controls the respective power switching means 260 is determined by the high or low voltage output state of the respective drive voltage circuit 163 which is connected directly to the input of that driver D and not by the open or closed condition of the respective further switch 600,601 which is connected to the input of that driver D via that resistor R2.

Thus in normal operation of the system the processing and control means 12 detects an input signal from a further switch 600, 601 via the buffer means 16 and in response provides an output signal via the buffer means 16 to control a driver means 151 and thereby operate a critical load 700, 701 associated by the processing and control means 12 with that further switch 600, 601. The further switches 600, 601 and the critical loads 700, 701 are therefore included with the switches 60, 61 and non-critical loads 70, 71 under functional control of the processing and control means 12. For example in an automotive vehicle electrical system this functional control may ensure that the headlights (critical loads) are not turned on unless the ignition (critical load) is turned on and that seat adjustment motors (non-critical loads) cannot be operated unless the ignition (critical load) is turned off. This functional control also enables the further switches 600, 601 and critical loads 700, 701, as well as the sensors 50, switches 60, 61 and non-critical loads 70, 71 to be tested via the processing and control means 12 in the central unit 10 without the need for the user to operate these switches or further switches. This test function can be incorporated as a programmable function of the microprocessor 14 or it can be performed with test equipment 90 when connected to the central unit 10.

The monitoring means 17 is operated by the battery +V and has an input 171 connected to the microprocessor 14 and an output 172 connected to the buffer means 16. The monitoring means 17 may include a retriggerable monostable circuit (not shown) which outputs a continuous low level to one input of an OR gate (not shown) when an "OK" pulse signal is being transmitted to the input 171 from the microprocessor 14 at regular intervals and at an appropriate frequency during normal operation of the processing and control means 12. In this case, the software of the microprocessor 14 is arranged so that a fault in its operation leads to a disruption of the "OK" signal to the input 171 which is detected by the monostable circuit failing to retrigger and hence providing a high level to the input of the OR gate which thus outputs a high level to the output 172. The fault in the software operation may be due to a fault originating in the microprocessor itself or may be due to a fault originating in another part of the central unit 10, for example in the 5 volt power supply 112. In any case, disruption of the "OK" signal to the input 171 constitutes a predetermioned failure condition of means within the central unit 10.

Via another input 173, the OR gate within the monitoring means 17 may be arranged to detect some predetermined failure condition of means within the central unit 10 directly rather than via the microprocessor 14. This may be for example failure within the custom unit 13 to provide clock pulses to a clock line 41, or failure of the 5 volt power supply 112 or failure of the 30 volt power supply 111.

A high level at the output 172 of the monitoring means 17 due to failure condition detection as described above sets all the tristate drive voltage circuits 163 in the buffer means 16 to their high impedance condition, i.e. as shown schematically the switches 163 are set to position B, which effectively disconnects the buffer means outputs 162 from the driver unit 15. When the buffer means 16 is thus disconnected, input signal from each further switch 600, 601 then become effective, via the resistor R2 in the respective driver means 151, to control the output of the respective driver D and hence to operate the respective critical load 700,701 which is then dedicated to the particular further switch 600,601. The arrangement whereby the input of each driver D is controlled either from a buffer output 162 or from a further remote switch 600,601 using the high value resistor R2 can be considered as a utilisation of the logic technique known as "wired-OR".

Thus in the above-described arrangement nothing in the central unit 10 associated with the operation of the non-critical loads 70,71, that is the power supply means 11 or processing and control means 12, need be duplicated in order to safeguard operation of the critical loads 700,701. In the example of an automotive vehicle electrical system the critical loads 700,701 which could be the engine ignition feed, headlights, tail lights and possibly the windscreen wipers come under direct control of the user when there is a failure condition as described above and the vehicle may then be taken safely to the side of the road.

In the drawing, each further power switching means 260 is shown as a relay arranged to control a high current from the battery +V via a fuse 30 to its respective critical load 700,701. Each further power switching means 260 could instead be, for example, a power MOSFET transistor. Also as shown, each link 82 connecting a critical load 700,701 to the central unit 10 is a low current signalling link and the power switching means 260 for operating that load 700,701 is located remote from the central unit 10 and near to that load 700,701 and is controlled via that low current signalling link 82. Alternatively, the further power switching means 260 for operating each critical load 700,701 could be located in the central unit 10 with the link 82 connecting each load 700,701 to the central unit 10 being a high current link from the battery +V to that load.

In the drawing the driver unit 15 is shown within the central unit 10. While included as part of the central unit 10, it is possible to have the driver unit 15 physically on the same circuit board as the other parts of the central unit 10 or otherwise as a physically separate item which is connected by an electro-mechanical connector and/or a cable to the buffer means 16. An advantage of the latter arrangement is that the driver unit 15, together with the further power switching means 260, further switches 600,601 and critical loads 700,701 can form a basic working system on its own with the switches 600,601 directly controlling respective dedicated loads 700,701. The remainder of the complete system shown and described with the non-critical loads and functional control of both the critical and non-critical loads can then be added to this basic system as required. If the connection between the driver unit 15 and the buffer means 16 should then fail, the basic system will remain usable.

In the arrangement described above and shown in the drawing, the low current signalling links 40 are multiplex links with interaction of the switches 60,61 and the non-critical loads 70,71 being controlled from the central unit 10 by means of time slot assignment multiplex. If a system is required in which there are only a small number of non-critical loads, then these non-critical loads and their associated switches could be each connected to the processing and control means 12 by dedicated non-multiplex links. This system would still have the advantage that in normal operation the processing and control means provides functional control of the non-critical loads and switches together with the critical loads and further switches, and that on failure of normal operation the critical loads are operable under direct control of the further switches.

The information handling and control system having fault protection according to the invention can have application other than to automotive vehicle electrical systems, for example to domestic appliances such as washing machines or to industrial control systems such as for heating and ventilation.

## Claims

1. An information handling and control system comprising a central unit and a plurality of remote units each connected to the central unit by a respective low current signalling link, wherein the central unit includes processing and control means, wherein at least one of the remote units has a user operable electrical switch connected to it, wherein at least one of the remote units includes power switching means for operating a respective high current load connected to that remote unit, wherein in normal operation of the system the processing and control means detects an input signal from a said switch and in response provides an output signal to control a said power switching means and thereby operate a said load associated by the processing and control means with said switch, characterised in that:

(a) said switches constitute a set of first switches, and said loads constitute a set of first, non-critical, loads, wherein on failure of normal operation of the processing and control means the first switches cannot operate the non-critical loads;

(b) a set of further remote, user operable, electrical switches is provided, each further switch being connected by a respective low current signalling link to the central unit;

(c) a set of further remote, critical, high current loads is provided, each critical load being operable by respective further power switching means and connected by a respective link to the central unit;

(d) the central unit includes a driver unit having a plurality of driver means each having an input connected to a dedicated one of said further switches and an output connected to a dedicated one of said further power switching means;

(e) the central unit includes buffer means connected to the processing and control means, said buffer means having inputs each connected to a said further switch and outputs each connected to a further input of said driver unit, wherein in normal operation of the system the processing and control means detects an input signal from a said further switch via said buffer means and in response provides an output signal via said buffer means to control a said driver means and thereby operate a said critical load associated by the processing and control means with said further switch; and

(f) the central unit includes monitoring means for detecting a predetermined failure condition of means within the central unit, said failure condition indicating failure of normal operation of the processing and control means, the monitoring means being connected to the buffer means, wherein in response to said failure condition detection the buffer means outputs are disconnected from the driver unit and an input signal from a said further switch then directly controls its respective driver means to operate its respective critical load.

2. A system as claimed in Claim 1, in which the low current signalling links connecting the remote units to the central units are multiplex links and, in normal operation of the system, interaction of the set of first switches and the set of non-critical loads is controlled from the central unit by means of time slot assignment multiplex.

3. A system as claimed in Claim 1 or Claim 2, in which each link connecting a critical load to the central unit is a low current signalling link, and in which each further power switching means provided for operating its respective critical load is located remote from the central unit and near to its respective critical load and is controlled by the respective output of the driver means via that low current signalling link.

4. An automotive vehicle electrical system including an information handling and control system as claimed in any previous claim.

## Fig.1a.

EP 0 396 355 A2

Fig.1b.

EP 0 396 355 A2